Europäisches Patentamt

European Patent Office

Office européen des brevets

(19)

(11) Veröffentlichungsnummer : **0 194 642**
**B1**

(12)

# EUROPÄISCHE PATENTSCHRIFT

(45) Veröffentlichungstag der Patentschrift :
**19.10.88**

(21) Anmeldenummer : **86103229.0**

(22) Anmeldetag : **11.03.86**

(51) Int. Cl.⁴ : **F 16 L   5/02**

(54) **Abdichtvorrichtung für Rohrleitungen.**

(30) Priorität : **12.03.85 DE 8507128 U**

(43) Veröffentlichungstag der Anmeldung :
**17.09.86 Patentblatt 86/38**

(45) Bekanntmachung des Hinweises auf die Patenterteilung : **19.10.88 Patentblatt 88/42**

(84) Benannte Vertragsstaaten :
**CH DE LI NL**

(56) Entgegenhaltungen :
**DE-A- 2 528 051**
**DE-A- 3 048 838**
**DE-U- 8 027 058·**
**GB-A- 2 140 114**

(73) Patentinhaber : **Rohrdurchführungstechnik Hans-Ullrich Ihlenfeldt**
**Stader Strasse 56**
**D-2806 Oyten (DE)**

(72) Erfinder : **Ihlenfeldt, Hans-Ullrich**
**Stader Strasse 56**
**D-2806 Oyten 1 (DE)**

(74) Vertreter : **Eisenführ & Speiser**
**Martinistrasse 24**
**D-2800 Bremen 1 (DE)**

## Beschreibung

Die Erfindung betrifft eine Abdichtvorrichtung für Rohrleitungen, die eine Mauer oder dergleichen unter Freilassen eines Ringspaltes zwischen einer Mauerbohrung und der Rohrleitung durchsetzen, mit mindestens einer zentral gelochten, aus elastischem Material bestehenden Dichtscheibe, die in den Ringspalt einsetzbar, durch Spannscheiben und Spannbolzen axial zusammenpreßbar und somit den Ringspalt abdichtend, in radialer Richtung vergrößerbar ist, wobei die äußere Spannscheibe im Durchmesser größer ist als der äußere Durchmesser des Ringspaltes und in der Form eines Flansches auf der Außenfläche der Mauer aufliegt.

Eine derartige Abdichtvorrichtung für Rohrleitungen ist bereits aus dem DE-U-80 27 058 bekannt. Mit einer solchen bekannten Vorrichtung können die durch Wände, beispielsweise die Außenwand eines Hauses, hindurchgeführten Rohrleitungen gegen Boden- oder Grundwasserdruck abgedichtet werden, und die mit einem größeren Durchmesser auf der Außenfläche der Mauer aufliegende äußere Spannscheibe leitet etwaige äußere Kräfte unmittelbar auf die Mauer über, ohne daß die im Ringspalt sitzenden Dichtscheiben diese Kräfte durch Reibung in der Mauerbohrung abbauen müssen. Bei der Abdichtung von Mauern oder dergleichen gegen Boden- und Grundwasserdruck sind auf der Außenfläche der Mauer jedoch häufig Dichtungsbahnen aufgebracht, um das Grundwasser vom Mauerwerk fernzuhalten. Bei der Verwendung der bekannten Abdichtvorrichtungen kam es bei Mauern mit aufgebrachten Dichtungsbahnen jedoch vor, daß nunmehr das Grundwasser entlang der Rohrleitung zwischen die Dichtungsbahn und die Außenfläche der Mauer drang und an dieser Stelle Schaden anrichtete.

Aus der DE-A-25 28 051 ist eine Dichtvorrichtung für Mauer-Rohrdurchführungen bekannt, bei der auch ein exzentrisch durch ein Futterrohr in der Mauer durchgezogenes Rohr abgedichtet werden kann. Hierzu ist an dem äußeren Ende des Futterrohres ein Flansch befestigt, mit dem wiederum eine ringförmige Scheibe verschraubt ist. Zwischen dem Flansch und der ringförmigen Scheibe wird eine Ringnut gebildet, in der eine Dichtungsscheibe 28 radial verschiebbar gehaltert ist. Hierdurch können radiale Differenzen, also Exzentrizitäten zwischen dem Rohr und dem Futterrohr bzw. dem Flansch innerhalb weiter Grenzen ausgeglichen werden. Die Abdichtung zwischen dem Rohr einerseits und dem Flansch andererseits erfolgt durch eingelegte O-Ringe. Darüber hinaus ist vorgesehen, daß eine auf die Außenseite der Mauer und die Außenseite des Flansches aufgelegte Dachpappe mittels eines Ringes und Bolzen an dem Flansch festgeklemmt werden kann, wobei die Bolzen die Dachpappe durchdringen und in der Mauer festgeschraubt sind.

Diese bekannte Rohrdurchführung setzt jedoch ein in die Mauer eingelassenes Futterrohr voraus, an dem der Flansch, z. B. durch Aufschrumpfen, befestigt wird, was eine nachträgliche Rohrdurchführung umständlicher oder zumindest aufwendig macht. Die durch die Dachpappe und den Flansch in die Mauer eingeschraubten Bolzen zum Einklemmen der Dachpappe stellen wiederum eine zusätzliche Quelle der Undichtigkeit dar.

Der vorliegenden Erfindung liegt die Aufgabe zugrunde, eine Abdichtvorrichtung der vorgenannten Art derart zu verbessern, daß neben der Abdichtung einer Rohrleitung gegenüber dem Mauerwerk auch eine einwandfreie Abdichtung gegenüber der auf der Außenfläche des Mauerwerks angebrachten Dichtungsbahn möglich ist.

Diese Aufgabe wird erfindungsgemäß dadurch gelöst, daß der Flansch an der Mauer befestigbar ist und ein weiterer, auf den ersten Flansch aufschraubbarer, zweiter Flansch vorgesehen ist, zwischen welchen beiden Flanschen eine auf der Außenfläche der Mauer angebrachte Dichtungsbahn abdichtend einklemmbar ist.

Durch diese Befestigung des ersten Flansches auf der Mauer wird sichergestellt, daß er, zusammen mit der zwischen den Spannscheiben eingespannten Dichtscheibe unverrückbar fest im Mauerwerk gehaltert ist, so daß auch durch Erschütterungen keine mechanischen Belastungen auf die auf der Außenfläche des Mauerwerks aufgebrachte, zum Beispiel aufgeklebte, Dichtungsbahn ausgeübt werden. Durch das Einklemmen der Dichtungsbahn zwischen den beiden Flanschen wird eine einwandfreie Fortsetzung der Abdichtung zwischen der Dichtungsbahn über den ersten Flansch und die Dichtscheibe zur Rohrleitung und der Mauerbohrung gewährleistet, so daß keinerlei Wasser oder Feuchtigkeit durch die Übergangsstellen in das Mauerwerk oder nach innen gelangen können.

Die Befestigung des ersten Flansches erfolgt zweckmäßigerweise dadurch, daß er mittels Schrauben und Dübel auf die Außenfläche der Mauer aufschraubbar ist. Um die erfindungsgemäße Abdichtvorrichtung auch nach dem Befestigen auf der Mauer und nach dem Aufbringen der Dichtungsbahn zum Abdichten einer eingeführten Rohrleitung spannen zu können, ist gemäß einer vorteilhaften Ausgestaltung der Erfindung der zweite Flansch im Bereich der Spannbolzen mit mindestens einer Öffnung versehen, über die die Spannbolzen auch nach dem Aufsetzen des zweiten Flansches zugänglich sind. Auf diese Weise ist es möglich, nicht nur die Rohrleitung später einzubringen und abzudichten, sondern die Rohrleitung kann auch nachträglich ausgewechselt und erneut abgedichtet werden, ohne daß dabei die Verschraubung der beiden Flansche gelöst werden müßte.

Das Einklemmen der Dichtungsbahn zwischen den beiden Flanschen ist bei einer vorteilhaften Ausführungsform dadurch möglich, daß am ersten Flansch axial nach außen zeigende Stehbolzen befestigt sind, auf die der zweite Flansch aufsteckbar und durch aufgeschraubte Muttern befestigbar ist.

Um an der Außenseite der Mauer eine im wesentlichen glatte Oberfläche zu erhalten und ein glattes Verkleben der Dichtungsbahn zu ermöglichen, ist gemäß einer weiteren vorteilhaften Ausgestaltung der Erfindung der erste Flansch im eingebauten Zustand in eine Aussparung in der Mauer versenkt eingesetzt und schließt mit der Außenfläche bündig ab. Die Dichtungsbahn, die nach dem Einbau der Abdichtvorrichtung in die Mauer angebracht wird, muß mit einer Aussparung versehen werden, aus der die verschiedenen Befestigungsmittel herausragen können. Der Durchmesser einer solchen Aussparung ist dabei kleiner als der kleinste Durchmesser der beiden Flansche, um eine einwandfreie Abdichtung zwischen den beiden Flanschen zu gewährleisten. Es ist jedoch auch möglich, anstelle einer Aussparung mehrere kleinere Durchbrüche für die Herausführung der Befestigungsmittel vorzusehen.

Weitere vorteilhafte Ausgestaltungen der Erfindung sind den weiteren Unteransprüchen zu entnehmen.

Die Erfindung wird nachfolgend anhand eines Ausführungsbeispieles unter Bezug auf die beigefügten Zeichnungen näher erläutert.

Es zeigen :

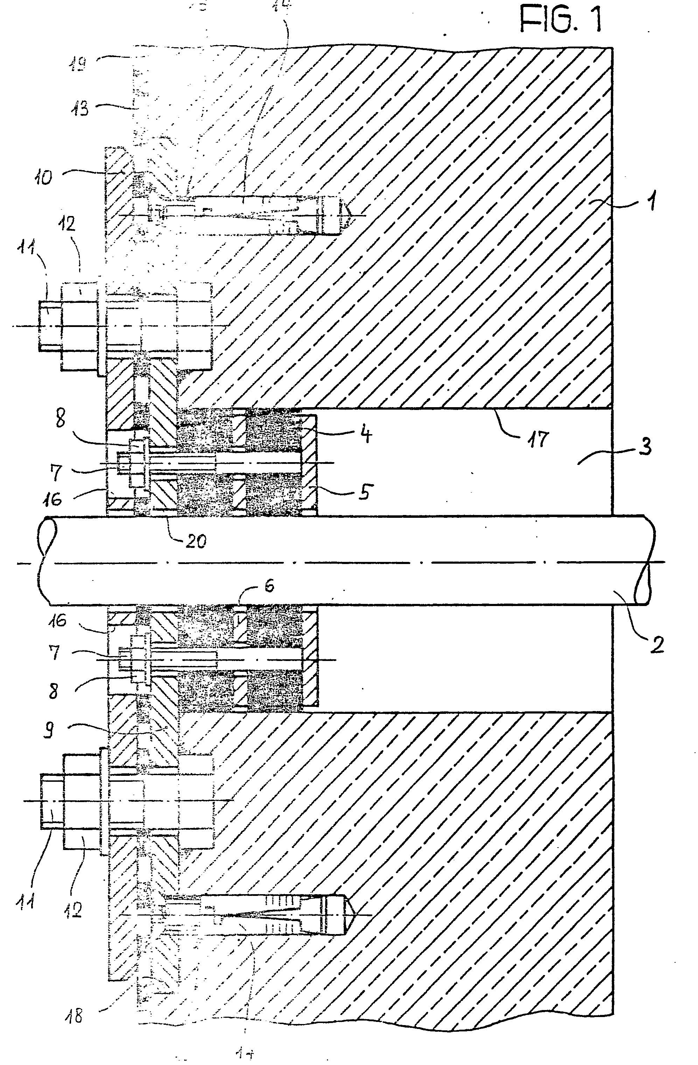

Fig. 1 einen Längsschnitt durch eine in eine Mauerbohrung eingesetzte Abdichtvorrichtung gemäß der Erfindung, und

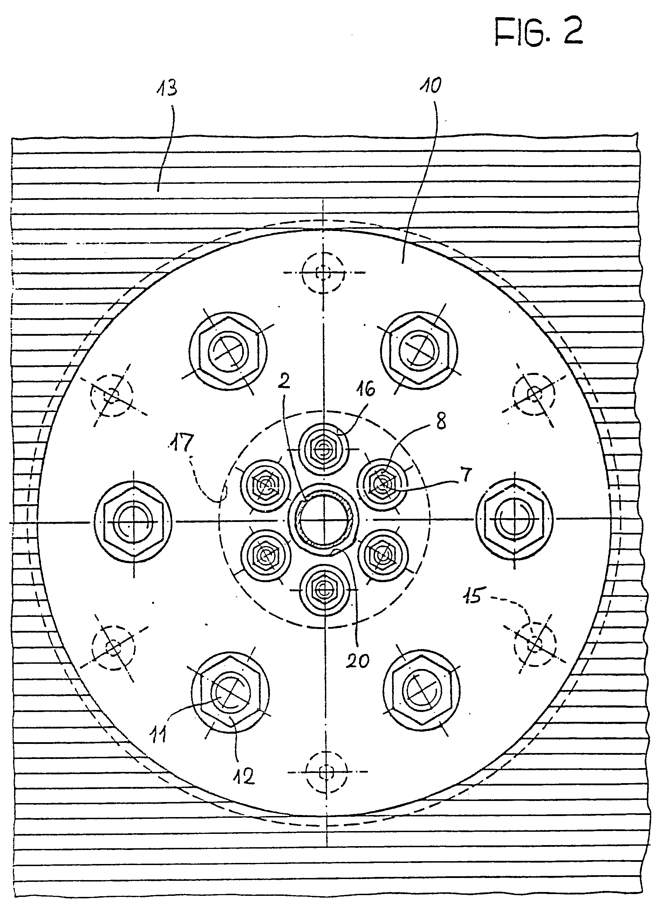

Fig. 2 eine Draufsicht von außen auf die Abdichtvorrichtung nach Fig. 1 in verkleinertem Maßstab.

In einer Mauer 1 ist eine Mauerbohrung 17 vorgesehen, um eine Rohrleitung 2 unter Freilassung eines Ringspaltes 3 einzuführen. In den Ringspalt 3 sind zwei zwischen einer inneren Spannscheibe 5 und einer äußeren Spannscheibe 9 angeordnete Dichtscheiben 4 eingesetzt, die durch Anziehen von Spannbolzen 7 mittels Spannmuttern 8 in axialer Richtung zusammenpreßbar sind, so daß sich ihre radiale Größe verändert und eine Abdichtung zwischen der Rohrleitung 2 und der Mauerbohrung 17 ergibt. Zwischen den beiden Dichtscheiben 4 ist noch eine Distanzscheibe 6 angeordnet, um eine besser kontrollierte Verformung der Dichtscheiben zu erreichen. Es ist jedoch auch möglich, anstelle von zwei Dichtscheiben 4 nur eine vorzusehen.

Die äußere Spannscheibe 9 weist einen größeren Durchmesser als die Mauerbohrung 17 bzw. als der äußere Durchmesser des Ringspaltes 13 auf und ist somit in der Form eines Flansches ausgebildet. Dieses Teil wird nachfolgend als erster Flansch 9 bezeichnet. Zur Erzielung einer glatten Außenfläche 19 der Mauer 1 ist in der Mauer eine Aussparung 18 vorgesehen, um den ersten Flansch 9 bündig mit der Außenfläche in die Mauer 1 zu versenken.

Der erste Flansch 9 ist durch Schrauben 15 und Dübel 14 im Mauerwerk 1 befestigt, damit Erschütterungen und auf die Rohrleitung 2 ausgeübte Kräfte direkt auf die Mauer 1 abgeleitet werden, ohne dabei zu Reibungsbelastungen zwischen den Dichtscheiben 4 und der Mauerbohrung 17 zu führen.

Eine nach dem Einbau der Abdichtvorrichtung auf die Außenfläche 19 der Mauer 1 aufgebrachte, zum Beispiel aufgeklebte Dichtungsbahn 13 liegt auf dem bündig eingelassenen ersten Flansch 9 auf. Die Dichtungsbahn 13 muß jedoch mit geeigneten Aussparungen versehen werden, damit die entsprechenden Befestigungsmittel der Abdichtvorrichtung herausgeführt werden können bzw. zugänglich bleiben.

Der erste Flansch 9 weist neben einer Zentralbohrung 20 zur Durchführung der Rohrleitung 2 sowohl Bohrungen zur Durchführung der Schrauben 15 als auch gleichmäßig verteilte Stehbolzen 11 auf, die auf der Innenseite angeschweißt sind und in axialer Richtung nach außen zeigen. Auf diese Stehbolzen 11 ist ein zweiter Flansch 10 mit entsprechenden Bohrungen aufsteckbar und kann durch entsprechend aufgesetzte Muttern 12 mit dem ersten Flansch unter Zwischenlegen der Dichtungsbahn 13 verschraubt werden. Der erste Flansch 9 und der zweite Flansch 10 weisen etwa den gleichen Durchmesser auf.

Die Dichtungsbahn 13 muß vor dem Aufbringen auf die Außenfläche 19 der Mauer 1 im Bereich der Abdichtvorrichtung mit einer oder mehreren Aussparungen versehen werden, damit zumindest die Stehbolzen 11 des ersten Flansches 9 herausstehen können. Der zweite Flansch 10 weist im Bereich der Spannbolzen 7 und der dazugehörigen Spannmuttern 6 Aussparungen 16 auf, damit auch nach dem Einbau der beiden Flansche 9 und 10 noch ein nachträgliches Spannen der Dichtscheiben 4 möglich ist. Dementsprechend muß auch die Dichtungsbahn 13 an diesen Stellen mit entsprechenden Aussparungen versehen werden. Es ist jedoch auch möglich, in der Dichtungsbahn 13 nur eine einzige größere Aussparung vorzusehen, die ein Herausführen aller Befestigungsmittel ermöglicht ; in diesem Falle muß diese einzige Aussparung jedoch kleiner sein als der Durchmesser des kleinsten der beiden Flansche 9 und 10, um noch ein einwandfreies Abdichten der Dichtungsbahn 13 im eingeklemmten Zustand zwischen den Flanschen zu ermöglichen.

Die Abdichtvorrichtung kann selbstverständlich auch für andere, durchzuführende Teile als Rohrleitungen verwendet werden, zum Beispiel für elektrische Kabel. Anstelle der an der inneren Spannscheibe 5 befestigten Spannbolzen 7 können diese auch am ersten Flansch 9 befestigt sein, so daß das Spannen von der Innenseite der Mauer 1 erfolgen würde. Ebenso ist es möglich, anstelle der Stehbolzen 11 im ersten Flansch 9 eine Gewindebohrung vorzusehen und den zweiten Flansch 10 durch entsprechend eingeschraubte Bolzen zu befestigen.

## Patentansprüche

1. Abdichtvorrichtung für Rohrleitungen (2), die eine Mauer (1) oder dergleichen unter Freilassen eines Ringspaltes (3) zwischen einer Mauerbohrung (17) und der Rohrleitung (2) durchsetzen, mit mindestens einer zentral gelochten, aus elastischem Material bestehenden Dichtscheibe (4), die in den Ringspalt (3) einsetzbar, durch Spannscheiben (5, 9) und Spannbolzen (7) axial zusammenpreßbar und somit den Ringspalt (3) abdichtend, in radialer Richtung vergrößerbar ist, wobei die äußere Spannscheibe (9) im Durchmesser größer ist als der äußere Durchmesser des Ringspaltes (3) und in der Form eines Flansches auf der Außenfläche der Mauer (1) aufliegt, dadurch gekennzeichnet, daß der Flansch (9) an der Mauer (1) befestigbar und ein weiterer, auf den ersten Flansch (9) aufschraubbarer, zweiter Flansch (10) vorgesehen ist, zwischen welchen beiden Flanschen (9, 10) eine auf der Außenfläche der Mauer (1) aufgebrachte Dichtungsbahn (13) abdichtend einklemmbar ist.

2. Abdichtvorrichtung nach Anspruch 1, dadurch gekennzeichnet, daß der erste Flansch (9) mittels Schrauben (15) und Dübel (14) auf die Außenfläche (19) der Mauer (1) aufschraubbar ist.

3. Abdichtvorrichtung nach Anspruch 1 oder 2, dadurch gekennzeichnet, daß der zweite Flansch (10) im Bereich der Spannbolzen (7) mit mindestens einer Öffnung (16) versehen ist, über die die Spannbolzen (7) auch nach dem Aufsetzen des zweiten Flansches (10) zugänglich sind.

4. Abdichtvorrichtung nach Anspruch 3, dadurch gekennzeichnet, daß am ersten Flansch (9) axial nach außen zeigende Stehbolzen (11) befestigt sind, auf die der zweite Flansch (10) aufsteckbar und durch aufgeschraubte Muttern (12) befestigbar ist.

5. Abdichtvorrichtung nach einem oder mehreren der vorhergehenden Ansprüche, dadurch gekennzeichnet, daß beide Flansche (9, 10) etwa den gleichen Durchmesser aufweisen.

6. Abdichtvorrichtung nach einem oder mehreren der vorhergehenden Ansprüche, dadurch gekennzeichnet, daß der erste Flansch (9) im eingebauten Zustand in eine Aussparung (18) in der Mauer (1) versenkt eingesetzt ist und mit der Außenfläche (19) bündig abschließt.

7. Abdichtvorrichtung nach einem oder mehreren der vorhergehenden Ansprüche, dadurch gekennzeichnet, daß eine nach dem Einsatz der Abdichtvorrichtung in die Dichtungsbahn (13) anzubringende Aussparung für die Befestigungsmittel (7, 8 ; 11, 12) kleiner ist als der Durchmesser des kleinsten der beiden Flansche (9, 10).

## Claims

1. A sealing device for piping (2) which passes through a wall (1) or the like to leave a clear annular gap (3) between a hole (17) through the wall and the piping (2), the device having at least one sealing disc (4) which consists of elastic material with a central hole and which may be inserted in the annular gap (3) and compressed axially by clamping discs (5, 9) and clamping bolts (7) and hence enlarged in the radial direction to seal the annular gap (3), the outer clamping disc (9) being larger in diameter than the outer diameter of the annular gap (3) and resting in the form of a flange against the outer face of the wall (1), characterized in that the flange (9) may be fastened to the wall (1) and a second wider flange (10) is provided, which may be screwed to the first flange (9), and a sealing sheet (13) applied to the outer face of the wall (1) may be clamped between the said two flanges (9, 10) to make a seal.

2. A sealing device as in Claim 1, characterized in that the first flange (9) may be screwed by means of screws (15) and wallplugs (14) onto the outer face (19) of the wall (1).

3. A sealing device as in Claim 1 or 2, characterized in that the second flange (10) is provided in the region of the clamping bolts (7) with at least one opening (16) through which the clamping bolts (7) are accessible even after the mounting of the second flange (10).

4. A sealing device as in claim 3, characterized in that studs (11) pointing axially outwards are fastened to the first flange (9), and the second flange (10) may be slipped onto them and fastened by nuts (12) screwed onto them.

5. A sealing device as in one or more of the preceding Claims, characterized in that both flanges (9, 10) exhibit about the same diameter.

6. A sealing device as in one or more of the preceding Claims, characterized in that the first flange (9) in the built-in state is inserted sunk in a recess (18) in the wall (1) and terminates flush with the outer face (19).

7. A sealing device as in one or more of the preceding Claims, characterized in that a cutout which after the insertion of the sealing device in the sealing sheet (13) has to be made in it for the fastening means (7, 8 ; 11, 12), is smaller than the diameter of the smaller of the two flanges (9, 10).

## Revendications

1. Dispositif d'étanchéité pour conduites (2) traversant un mur (1) ou similaire en ménageant un intervalle annulaire (3) entre un forage (17) du mur et la conduite (2), comportant au moins un disque d'étanchéité central perforé (4) constitué en matériau élastique, pouvant être introduit dans l'intervalle annulaire (3) et comprimé en direction axiale par des disques de serrage (5, 9) et des boulons de serrage (7), en pouvant ainsi être agrandi en direction radiale et en assurant l'étanchéité de l'intervalle annulaire (3), le disque de serrage extérieur (9) ayant un diamètre supérieur au diamètre extérieur de l'intervalle annulaire (3) et reposant sous forme d'une bride sur la surface extérieure du mur (1), caractérisé en ce que la bride (9) peut être fixée sur le mur (1) et en ce qu'il est prévu une autre bride ou seconde bride (10) pouvant être fixée par vissage sur la première bride (9), une bande d'étanchéité (13) appliquée sur la surface extérieure du mur (1) pouvant être bloquée de façon étanche entre les deux brides (9, 10).

2. Dispositif d'étanchéité selon la revendication 1, caractérisé en ce que la première bride (9) peut être fixée par vissage sur la surface extérieure (19) du mur (1) au moyen de vis (15) et de chevilles (14).

3. Dispositif d'étanchéité selon la revendication 1 ou 2, caractérisé en ce que la seconde bride (10) est munie d'au moins une ouverture (16) dans la zone des boulons de serrage (7), les boulons de serrage (7) étant accessibles par cette ouverture même après la mise en place de la seconde bride (10).

4. Dispositif d'étanchéité selon la revendication 3, caractérisé en ce que des goujons filetés (11) dirigés vers l'extérieur sont fixés sur la première bride (9), la seconde bride (10) pouvant être engagée sur ces goujons et pouvant y être fixée par des écrous vissés (12).

5. Dispositif d'étanchéité selon l'une ou plusieurs des revendications précédentes, caractérisé en ce que les deux brides (9,10) présentent sensiblement le même diamètre.

6. Dispositif d'étanchéité selon l'une ou plusieurs des revendications précédentes, caractérisé en ce que la première bride (9) est, à l'état monté, engagée en étant noyée dans un évidement (18) du mur (1) et est à fleur avec la surface extérieure (19).

7. Dispositif d'étanchéité selon l'une ou plusieurs des revendications précédentes, caractérisé en ce qu'un évidement devant être pratiqué dans la bande d'étanchéité (13), après la mise en place du dispositif d'étanchéité, pour les organes de fixation (7, 8 ; 11, 12), est plus petit que le diamètre de la plus petite des deux brides (9,10).

FIG. 1

0 194 642

FIG. 2